# EUROPÄISCHE PATENTANMELDUNG

(11) **EP 1 132 990 A2**
(43) Veröffentlichungstag der Anmeldung: **12.09.2001**
(21) Anmeldenummer: 00127868.8
(22) Anmeldetag: 20.12.2000
(51) Int. Cl.: H01M 10/48, G01R 31/36

(54) **Verfahren und Vorrichtung zur Bestimmung des Zustandes eines Energiespeichers**

(30) Priorität: 07.03.2000 DE 10010980
(71) Anmelder: ROBERT BOSCH GMBH, 70442 Stuttgart (DE)
(72) Erfinder: Sarfert, Christel, 70174 Stuttgart (DE); Schoch, Eberhard, 70469 Stuttgart (DE); Blattert, Dieter, 74366 Kircheimt (DE)

(57) **Zusammenfassung**

Die Erfindung bezieht sich auf einen Energiespeicher (27) mit einem Datenträgerbaustein (30), welcher Produktbasisdaten und Produktreferenzdaten enthält. Der Datenträgerbaustein (30) umfaßt neben einem Datenspeicherbereich (32) einen Zeitzähier (31) sowie einen die Temperaturen, denen der Energiespeicher (27) ausgesetzt war, erfassenden Temperatursensor (33). Daneben ist ein Verfahren zur Konditionierung eines Energiespeicher (27) vor dem Einbau in eine externe Zustanderkennungsroutine offenbart, wo aus einer gestuft erfolgenden Hochstromentladung ermittelte Werte des Innenwiderstands R_{i,n} zur Abschätzung der Kapazität und der Alterung des Energiespeichers (27) herangezogen werden.

## Beschreibung

### Technisches Gebiet:

Zur Erkennung des Zustandes von technischen Bauteilkomponenten, wie beispielsweise eines Energiespeicher in Gestalt einer Autobatterie, ist eine Diagnosemöglichkeit notwendig, mit der einerseits eine Selbstidentifikation der Baukomponente und andererseits eine schnelle Information über den technischen Zustand der Baukomponente möglich ist.

### Stand der Technik:

Die Druckschrift DE 295 12 330 U1 offenbart eine Einrichtung zur Produktdatenhaltung. Ein elektronisch permanent schreib- und lesbarer, jedoch nicht ohne weiteres löschbarer Datenträger ist nach Art einer Chipkarte einem Produkt sowohl mit Produktbasisdaten als auch mit einer optisch lesbaren dazu korrespondierenden Klarschriftkennung zugeordnet. Ereignisse, die sich während des Lebenslaufes des Produkts ereignen, wie Fertigung, Endprüfung, Nacharbeit, Versand, Nutzerbetrieb, Service und Wartung lassen sich durch elektronische Schreib-/ und Lesegeräte ebenfalls auf dem Datenträger vermerken, so daß die Produktbasisdaten um durch diese Ereignisse bedingte zusätzliche Daten ergänzbar sind.

Mittels der vorgeschlagenen Chipkarte lassen sich jedoch keine während des Lebenslaufes eines Produktes auftretenden äußeren Einflüsse, wie beispielsweise das Temperaturniveau, dem ein Bauteil wie beispielsweise ein Energiespeicher wie eine Kfz-Batterie ausgesetzt sein kann, festhalten. Zur Aufnahme neuer Daten sind bei der aus der DE 295 12 330 U1 bekannten Lösung externe Schreib-/Lesegeräte notwendig, die neue die Basisdaten übersteigende Informationen der Chipkarte stets von extern kommend mitteilt.

Bei Energiespeichern, wie beispielsweise Autobatterien, mit denen sich die elektrischen Verbraucher eines Fahrzeuges versorgen lassen und drüber hinaus auch noch elektrische Fremdkraftbremsanlagen betreiben lassen, ist eine Energiespeicherüberwachung höchst wünschenswert bzw. zwingend erforderlich.

### Darstellung und Vorteile der Erfindung:

Die mit der Erfindung einhergehenden Vorteile sind vielfältiger Natur. Bei Ausstattung eines Energiespeichers mit einem Datenträgerbaustein kann eine bessere Wartbarkeit eines Energiespeichers erreicht werden, indem sich beispielsweise der aktuelle tatsächliche Wert des Innenwiderstandes Rᵢ des Energieträgers, beispielsweise einer Batterie als Referenzwert im Datenspeicher des Datenträgerbausteins abspeichern läßt und so für Vergleichsoperationen zur Verfügung steht. Ferner läßt sich die genaue Kapazität des Energiespeichers bzw. der Batterie im Datenspeicher abspeichern, wobei diese Kapazität nicht unbedingt mit der Kapazität des Energiespeichers übereinstimmen muß.

Energiespeicherbasisdaten wie Typ, Fertigungsdatum, Fertigungswerk, Seriennummer, etc. lassen sich ebenfalls im Speicherbereich des Datenträgerbausteins ablegen und sind somit während des Einsatzes des Energiespeichers ebenfalls verfügbar.

Daneben enthält der Datenträgerbaustein einen Zeitzähler, der zurücksetzbar ist. So kann einerseits die vor der Inbetriebnahme des Energiespeichers verstrichene Zeitspanne, andererseits die nach der ersten Inbetriebnahme vergangene Zeit erfaßt werden, was ebenfalls erheblich für die Beurteilung der Alterung eines Energiespeichers ist. Weiterhin kann der Datenträgerbaustein einen Temperatursensor umfassen, welcher die Umgebungstemperatur mißt, welcher der Energiespeicher derzeit oder in der Vergangenheit ausgesetzt war. Für den Energiespeicher kritische Temperaturen, wie länger andauernde Hitzeperioden, oder auch Frostperioden lassen sich erfassen und im Speicher des Datenträgerbaustein ablegen. Aus den gespeicherten Temperaturwerten lassen sich ebenfalls Aussagen über den Alterungszustand des Energiespeichers treffen.

Mittels eines weiterhin vorgeschlagenen vorteilhaften Konditionierverfahrens für einen Energiespeicher bzw. für eine Batterie, der bzw. die den Datenträgerbaustein nicht enthält, läßt sich eine Batteriezustandserkennung realisieren, bei der der aktuelle Batterieladezustand berücksichtigt wird. Bei einer solchen vorteilhaften Batteriezustandserkennung wird der momentane Ladungszustand eines Energiespeichers bzw. einer Batterie aus der Extrapolation einer ermittelten Leerlaufspannung bestimmt, bevor nach gegebenenfalls erforderlicher Aufladung des Energiespeichers bzw. der Batterie im Rahmen einer gestuft erfolgenden Hochstromentladung eine Ermittlung der Innenwiderstandswerte zu bestimmten Ladungszuständen des Energiespeichers erfolgt. Aus einer nachfolgenden Vergleichsoperation der solcherart ermittelten Innenwiderstandswerte und aus dem Absolutwert für den Innenwiderstand kann im Rahmen einer externen Batteriezustanderkennungsroutine auf die noch dem Energiespeicher bzw. der Batterie innewohnende Kapazität geschlossen werden.

Die Energiespeicherzustanderkennungsroutine kann bis zur Aufladung des Energiespeichers bzw. der Batterie auf einen zwischen 50% und 100% der Aufnahmekapazität des Energiespeichers liegenden Wert beispielsweise im Kraftfahrzeug bei Steuereinheit und Mikrocomputer ablaufen. Die sich anschließenden Verfahrensschritte insbesondere die Hochstromentladungen sind dagegen bevorzugt in einer Fachwerkstatt durchzuführen.

### Zeichnung:

Anhand einer Zeichnung wird die Erfindung nachstehend näher erläutert.

### Es zeigen die einzelnen Figuren der Zeichnung:

- Figur 1: die perspektivische Ansicht einer als Energiespeicher dienenden Fahrzeugbatterie,
- Figur 2: einen ersten Teil einer Energiespeicherzustandserkennungsroutine für Energiespeicher ohne Datenträgerbauteil und
- Figur 3: die Fortsetzung der Energiespeicherzustandserkennungsroutine nach Figur 2.

### Ausführungsvarianten:

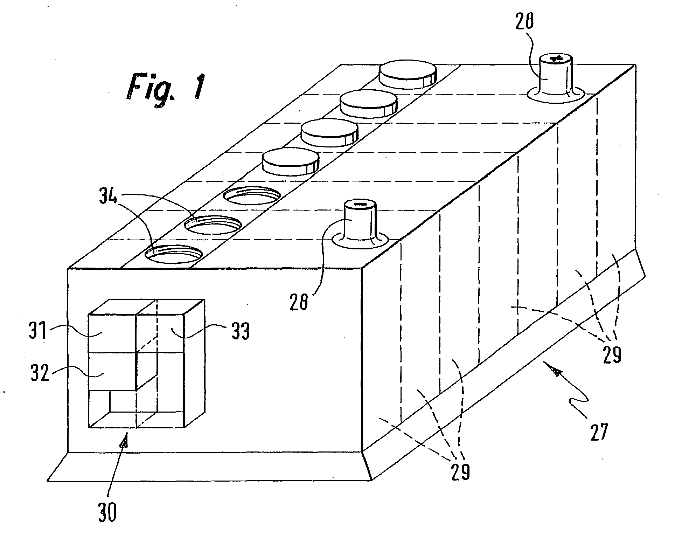

Figur 1 zeigt die perspektivische Ansicht einer als Energiespeicher 27 dienenden Fahrzeugbatterie, in deren Inneres ein Datenträgerbaustein 30 integriert ist. Der Datenträgerbaustein 30 kann auch auf einer Oberfläche der Fahrzeugbatterie, beispielsweise auf einer Seitenfläche angeordnet sein.

Der Energiespeicher 27 - bevorzugt eine Fahrzeugbatterie - ist mit einem Befestigungssockel versehen, ferner ist sein Inneres durch Trennwände in einzelne Batteriezellen 29 unterteilt, die über mittels Stopfen verschließbare Öffnungen 34 mit Flüssigkeit befüllbar sind. Der Energiespeicher 27 enthält einen Datenträgerbaustein 30, der seinerseits einen Datenspeicherbereich 32 sowohl für Basisinformationen, wie Fertigungsdatum, Typ, Seriennummer, etc. als auch für Referenzdaten, wie beispielsweise die aktuelle Batteriekapazität, die von der Nennkapazität durchaus abweichen kann und für einen zu ermittelnden Innenwiderstandswert Rᵢ als Referenzwert für Innenwiderstandsmessungen bei der Kapazitätsbestimmung dienen kann.

Daneben ist im Datenträgerbaustein 30 ein Zeitzähler 31 untergebracht, mit dem sich ab Fertigstellung des Energiespeichers 27 die Zeit bis zur erstmaligen Inbetriebnahme des Energiespeichers 27 ablesen läßt. Während dieser Standzeit ist der Energiespeicher 27 bereits Umgebungseinflüssen ausgesetzt, die seine Alterung im ungünstigen Fall beschleunigen können; der Zeitzähler 31 ist als rücksetzbarer Zeitzähler 31 ausgeführt und wird bei Inbetriebnahme des Energiespeichers 27 auf t = 0 gesetzt. Daneben kann der Zeitzähler 31 die seit Inbetriebnahme des Energiespeichers 27 vergangene Betriebszeit registrieren.

Eine weitere mögliche Nutzungsmöglichkeit des Datenträgerbausteins 30 kann an diesem durch Integration eines Temperatursensors 33 vorgesehen werden. Mit diesem Temperatursensor 33 können die Umgebungstemperaturen gemessen werden, denen der Energiespeicher 27 während der verstrichenen Lebensdauerzeitspanne ausgesetzt war. Die kritischen Temperaturen werden registriert und können einfach kodiert im Datenspeicherbereich 32 abgelegt werden. Aus dem im Datenspeicherbereich 32 abgelegten Temperaturdaten läßt sich abschätzen, wie weit der Alterungsprozeß des jeweiligen Energiespeichers 27 bereits fortgeschritten ist oder wie weit er fortgeschritten sein kann.

Der Datenträgerbaustein 30 kann einen Mikroprozessor bzw. Computer umfassen, der auf die zugeordneten Speichermitteln zugreifen kann und die Auswertung der vom Temperatursensor zugeführten Messwerte vornimmt und prinzipiell auch die Batteriezustandserkennung durchführen kann. Wird die Batteriezustandserkennung von einem Steuergerät oder einem anderen Mikroprozessor im Fahrzeug durchgeführt, kann dieses Steuergerät den Batteriechip auswerten und die Batterie erkennen. Die auf dem Chip abgespeicherten Informationen können bei der Ladezustandsermittlung dann berücksichtigt werden.

Durch den Batteriechip wird die Batterie in die Lage versetzt, sich selbst zu identifizieren. Die Informationen, die der Chip trägt, betreffen beispielsweise das Fertigungsdatum, die genaue Kapazität und die Grösse des Innenwiderstandes der neuen, vollgeladenen Batterie können einer Batteriezustandserkennung oder anderen Bordnetzkomponenten zur Verfügung gestellt werden. Die Konditionierung und Prüfung der neuen oder gebrauchten Batterie ist Grundlage für die Initialisierung und Realisierung einer Batteriezustandserkennung.

Erfindungsgemäß ist weiterhin ein Verfahren zur Konditionierung eines Energiespeichers 27 vorgesehen, welchem ein Energiespeicher 27 ohne Chip bzw. Datenträgerbaustein 30 zu unterziehen ist, bevor dieser an eine Energiespeicherzustanderkennungsroutine angeschlossen werden kann. Nach Durchführung einer solchen Konditionierung kann der Energiespeicher bzw. die Batterie ohne Chip in eine bestehende Batteriezustandserkennung für einen Energiespeicher mit Chip eingebaut werden.

Nach dem Start (Schritt 1) des nun beschriebenen, erfindungsgemäß vorgeschlagenen Konditionierungsverfahrens wird zunächst die Leerlaufspannung U_{Batt,L} gemessen (Schritt2). Danach erfolgt der Start des Motors des Fahrzeugs (Schritt3). Der beim Startvorgang herrschende Innenwiderstands der Batterie R_{i,S} wird gemessen und im Schritt 4 mit dem Innenwiderstand R_{i,B} der von der Batteriezustandserkennung zuletzt ermittelt wurde, verglichen. Ist der beim Startvorgang ermittelte Innenwiderstände Rᵢₛ in etwa gleich dem von der Batteriezustandserkennung zuletzt ermittelten und abgespeicherten Wert R_{i,B}, ist der Algorithmus und damit das Konditionierungsverfahren beendet (Schritt 5).

Wird im Rahmen des Vergleichs 4 die Gleichheit der Innenwiderstände R_{i,S} mit R_{i,B} verneint, muss davon ausgegangen werden, dass es sich bei der eingesetzten Batterie um eine der Batteriezustandserkennung bisher unbekannte Batterie handelt und das Verfahren wird mit Schritt 6 fortgesetzt. Dabei wird aus der vor dem Start gemessenen Leerlaufspannung U_{Batt,L}, der ungefähre Ladezustands L_{B} der Batterie bzw. des Energiespeichers 27 abgeschätzt. Daran schließt sich ein Aufladevorgang 7 an, bei dem eine gewisse Ladungsmenge in die Batterie eingeladen wird, so dass sichergestellt wird, dass sich ihr Ladezustand L_{B} zwischen 50% und 100% befindet. Diese Ladung erfolgt innerhalb des normalen Betriebes des Kraftfahrzeugs. Die benötigte elektrische Energie wird vom Generator geliefert.

An den Aufladung 7 schließt sich als nächster Verfahrensschritt 8 ein Vergleich an, in dem eine Abfrage erfolgt, ob die Batteriespannung U_{Batt} ≥ 14V ist. Wird dies verneint, so erfolgt ein Rücksprung 9 zum Aufladevorgang 7 und die Batterie wird weiter aufgeladen, wodurch sich letztendlich auch die Batteriespannung U_{Batt} weiter erhöhen. Nach genügender Aufladung 7 steigt die Batteriespannung U_{Batt} auf 14V und die Aufladung wird im Schritt 10 beendet. Die Ladung der Batterie wird also beendet oder unterlassen, wenn erkannt wird, dass die Batterie in die Gasung gerät, was durch das Erreichen einer vorher festgelegten Spannungsgrenze von 14 Volt beim Laden angezeigt wird. Aus der gemessenen Leerlaufspannung und der beim Laden der Batterie geflossenen Ladungsmenge kann eine grobe Abschätzung der aktuellen Kapazität der Batterie erhalten werden.

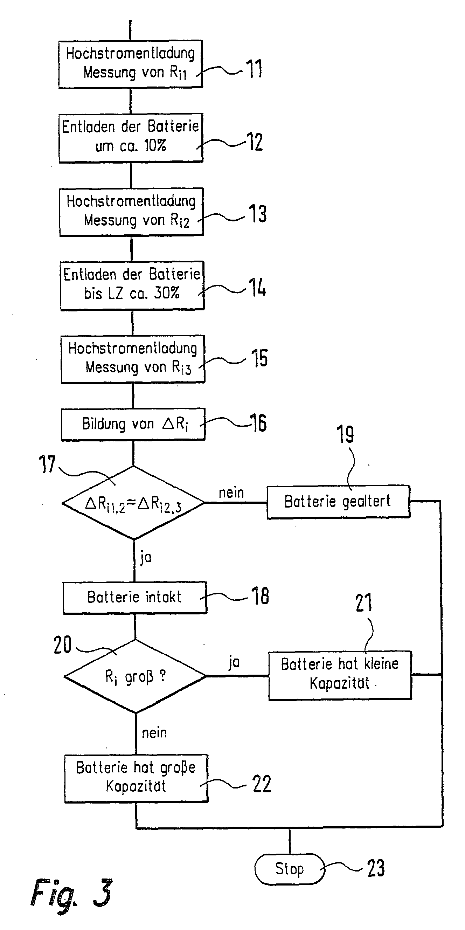

In Figur 3 ist der weitere Fortgang des Konditionierungsverfahrens mit mehreren gestuften Hochstromentladungsphasen an. Eine erste Hochstromentladung (Schritt 11) dient zur Feststellung des Innenwiderstandes Rᵢₗ der Batterie. Daran anschliessend wird die Batterie um ca. 10% entladen (Schritt 12) und die Innenwiderstandsmessung wird dann wiederholt, zur Bestimmung des Innenwiderstandes Rᵢ₂.(Schritt13). Nach diesem Schritt wird die Batterie im Schritt 14 weiter entladen, bis zu einem Ladezustand von etwa 30% .In einer sich als Schritt 15 anschliessenden dritten Hochstromentladung wird der Innenwiderstand Rᵢ₃ gemessen.. Nach jeder Hochstromentladung erfolgt also eine erneute Messung des Innenwiderstands R_{i,n}. Aus den Messwerten für den Innenwiderstand der Batterie unter verschiedenen Bedingungen ergeben sich Hinweise auf die Kapazität und den ungefähren Alterungszustand der Batterie, die zur Initialisierung der Batteriezustandserkennung hilfreich sind.

Zur Ermittlung des Alterungszustandes der Batterie gibt es mehrere Möglichkeiten. Der Alterungszustand kann beispielsweise dadurch bestimmt werden, dass man selbst im vollgeladenen Zustand verhältnismässig hohe Werte für den Innenwiderstand der Batterie misst. Ein weiterer Indikator für die Alterung ist eine deutliche Differenz zwischen dem ersten gemessenen Innenwiderstandswert und dem, den man nach der kurzen Entladung (Schritt 12) von ca. 10% bis 20 % misst. Gemäss dem in Figur 3 beschriebenen Verfahren bieten sich für die Auswertung des Innenwiderstandes zur Abschätzung des Alterungszustandes der Batterie folgende Möglichkeiten an:

Im Schritt 16 werden die Differenzen ΔR_{i,n} der Innenwiderstände R_{i,n} gebildet, die in den Hochstromentladungsphasen ermittelt werden. Im Rahmen einer Vergleichsoperation 17 werden die Differenzen ΔR_{i,Batt1,2} und ΔR_{i,Batt2,3} zwischen erster und zweiter Hochstromentladung bzw. zwischen der zweiten Hochstromentladung und der weiteren Hochstromentladung gebildet. Entsprechen die in der Vergleichsoperation 17 ausgewerteten Werte in etwa einander, so handelt es sich um einen nach wie vor intakten Energiespeicher und es wird im Schritt 18 angezeigt, dass die Batterie intakt ist. Werden hingegen deutlich voneinander verschiedene Innenwiderstandswerte ermittelt, ist dies ein Indiz für einen bereits gealterten Energiespeicher mit entsprechend negativer Energiespeicherzustandsanzeige, dabei wird in der Zustandsausgabe 19 angezeigt, dass die Batterie gealtert ist.

Wird im Schritt 18 festgestellt, dass die Batterie nicht gealtert ist, kann durch Auswertung des Innenwiderstandes die Grössenordnung der Kapazität der Batterie abgeschätzt werden. Der Innenwiderstand ist normalerweise umso grösser, je kleiner die Kapazität ist. Dabei kann beispielsweise der Vergleich des gemessenen Innenwiderstandes mit Werten, die in einer Tabelle abgelegt sind, hilfreich bei der Kapazitätsabschätzung sein.

Im Verfahren nach Figur 3 wird bei Feststellung eines positiven Energiespeicherzustands (nach Schritt 18) die Größe des Innenwiderstands Rᵢ im Schritt 20 mit vorgebbaren Werten verglichen, beispielsweise mit im Datenspeicher abgelegten Werten. Dabei wird die Größenordnung der Kapazität des Energiespeichers 27 abgeschätzt werden. Der Innenwiderstand Rᵢ eines Energiespeichers 27 ist in der Regel um so größer, je kleiner die Kapazität des Energiespeichers 27 ist. Ist der Innenwiderstand Rᵢ groß, hat der Energiespeicher 27 eine kleine Kapazität mit entsprechender Angabe an der Zustandsausgabe 21. Ist der Wert für den Innenwiderstand Rᵢ hingegen klein, hat der Energiespeicher 27 eine große Kapazität, dies wird in der Zustandsausgabe 22 angezeigt. Das erfindungsgemässe Verfahren endet im Schritt 23 nachdem erkannt wurde, dass die Batterie gealtert ist (Schritt 19) und dass die Batterie eine kleine oder grosse Kapazität aufweist (Zustandsausgabe 21 oder 22).

Die Verfahrensschritte 1 bis 10 können im normalen Betrieb des Fahrzeugs ablaufen, während die Verfahrenschritte 12 bis 23 , insbesonders die Hochstromentladungsphasen in einer Fachwerkstatt durchgeführt werden sollten.

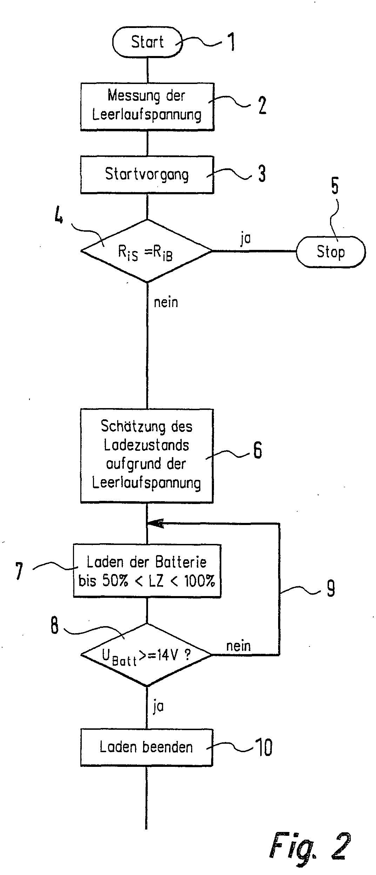

Mittels der erfindungsgemäß aufgezeigten Varianten lassen sich Alterungszustände von Energiespeichern 27 mit Datenträgerbausteinen 30 direkt abschätzen und bei solchen Energiespeichern 27 ohne Datenträgerbaustein 30 kann nach Durchlauf des erfindungsgemäß vorgeschlagenen Konditionierungsverfahren gemäß der Figuren 2 und 3 mit ziemlicher Genauigkeit das Alter des Energiespeichers angeben. Werde. Somit läßt sich eine Energiespeicherzustandsüberwachung auf beiden Wegen realisieren.

### Bezugszeichenliste

- 1: Start
- 2: Spannungsmessung
- 3: Start des Motors
- 4: Widerstandsvergleich
- 5: Ende
- 6: Schätzung Ladezustand
- 7: Laden der Batterie
- 8: Vergleich
- 9: Rücksprung
- 10: Ladevorgang beenden
- 11: erste Hochstromentladung
- 12: Entladen
- 13: zweite Hochstromentladung
- 14: Entladen
- 15: dritte Hochstromentladung
- 16: Bildung ΔRᵢ,
- 17: Vergleich Differenz
- 18: Zustandsausgabe Batterie intakt
- 19: Zustandsausgabe Batterie gealtert
- 20: Vergleich Innenwiderstand
- 21: Zustandsausgabe kleine Kapaz.
- 22: Zustandsausgabe grosse Kapaz.
- 23: Stop
- 27: Energiespeicher
- 28: Pol
- 29: Energiespeicherzelle
- 30: Datenträgerbaustein
- 31: Zeitzähler
- 32: Datenspeicherbereich
- 33: Temperatursensor
- 34: Verschlüsse

## Patentansprüche

1. Energiespeicher mit einem Datenträgerbaustein (30), der Produktbasisdaten und Produktreferenzdaten enthält, **dadurch gekennzeichnet, daß** der Datenträgerbaustein (30) neben einem Datenspeicherbereich (32) einen Zeitzähler (31) enthält.

2. Energiespeicher gemäß Anspruch 1, **dadurch gekennzeichnet, daß** der Datenträgerbaustein (30) in den Energiespeicher (27) integriert ist.

3. Energiespeicher gemäß Anspruch 1, **dadurch gekennzeichnet, daß** zur Gruppe der Produktbasisdaten die Typnummer des Energiespeichers (27) und das Fertigungsdatum, sowie Seriennummer oder weitere Daten zählen.

4. Energiespeicher gemäß Anspruch 1, **dadurch gekennzeichnet, daß** zur Gruppe der Produktreferenzdaten der Innenwiderstand Rᵢ des Energiespeichers (27) sowie die aktuelle Kapazität des Energiespeichers (27) zählen.

5. Energiespeicher gemäß Anspruch 1, **dadurch gekennzeichnet, daß** der Zeitzähler (31) ein rücksetzbarer Zeitzähler ist, der die vor Inbetriebnahme liegende Zeitspanne und die ab Inbetriebnahme des Energiespeichers (27) verstrichene Zeitspanne registriert.

6. Energiespeicher gemäß einem der vorhergehenden Ansprüche, **dadurch gekennzeichnet, daß** der Datenträgerbaustein zusätzlich einen Temperatursensor (33) umfaßt.

7. Verfahren zur Konditionierung eines Energiespeicher zum Einbinden in eine Batteriezustanderkennungsroutine mit nachfolgenden Verfahrensschritten:
- dem Ermitteln der Leerlaufspannung U_{L} des Energiespeichers (27) nach einem Entladestromstoß,
- dem Aufprägen einer in mehreren Stufen erfolgenden Hochstromentladung auf den Energiespeicher (27) zur Ermittlung von Innenwiderstandswerten R_{i,n},
- der Auswertung der erhaltenen Werte für die Innenwiderstände R_{i,n} oder der Differenz zwischen den aus gestuft erfolgenden Hochstromentladungen behaltenen Werte des Innenwiderstands Rᵢ und der Abschätzung der Kapazität des Energiespeichers (27) aus dem Wert des Innenwiderstands Rᵢ.

8. Verfahren gemäß Anspruch 7, **dadurch gekennzeichnet, daß** die Leerlaufspannung ermittelt wird und aus der ermittelten Leerlaufspannung U_{Batt,L} eine Abschätzung der noch in den Energiespeicher (27) einzuladenden Ladungsmenge erfolgt.

9. Verfahren gemäß Anspruch 7, **dadurch gekennzeichnet, daß** durch Nachladen des Energiespeichers (27) dessen Ladezustand in einem Bereich ) zwischen 50%<L_{B}>100% gehalten wird und die Nachladung beendet wird, wenn die Spannung am Energiespeicher (27) einen vorgebbaren Wert überschreitet, wobei dieser Wert so gewählt wird, daß noch keine Gasung des Energiespeichers auftritt.

10. Verfahren gemäß Anspruch 7, **dadurch gekennzeichnet, daß** nach der ersten Hochstromentladung (11) ein weiteres Entladen des Energiespeichers auf etwa 90% erfolgt und nach einer zweiten Hochstromentladung (13) ein weiteres Entladen auf etwa 30% erfolgt und danach jeweils der Innenwiderstand gemessen wird (Rᵢ).

11. Verfahren gemäß Anspruch 7, **dadurch gekennzeichnet, daß** aus dem Vergleich der Differenzen der Innenwiderstände Rᵢ zwischen den Innenwiderständen R_{i,1} und R_{i,2} nach der ersten und der zweiten Hochstromentladung mit der Differenz der Innenwiderstände Rᵢ zwischen den Innenwiderständen R_{i,2} und R_{i,3} nach der zweiten und einer weiteren Hochstromentladung auf einen positiven oder negativen Batteriezustand geschlossen wird.
